# EUROPEAN PATENT APPLICATION

(11) **EP 4 625 257 A1**
(43) Date of publication of application: **01.10.2025**
(21) Application number: 25154084.5
(22) Date of filing: 27.01.2025
(51) Int. Cl.: G06N 3/0464, G06N 3/096, G06N 3/0985, G06N 10/60, G06N 10/80

(54) **INFORMATION PROCESSING PROGRAM, INFORMATION PROCESSING METHOD, AND INFORMATION PROCESSING APPARATUS**

(30) Priority: 26.03.2024 JP 2024050527
(71) Applicant: FUJITSU LIMITED, Kawasaki-shi, Kanagawa 211-8588 (JP)
(72) Inventor: GOKITA, Shun, Kawasaki-shi, 211-8588 (JP)
(74) Representative: Haseltine Lake Kempner LLP

(57) **Abstract**

An information processing program causing a computer to execute processing including: acquiring a trained model that has a function of outputting a classification result of input data in accordance with a feature amount extracted from the data; updating the acquired trained model based on a dataset that includes specific type of data such that classification accuracy of the specific type of data is improved; and controlling an arithmetic unit to train, based on the dataset, a quantum circuit that has a function of outputting a classification result of the specific type of data in accordance with a feature amount extracted from the specific type of data by the updated trained model.

## Description

### FIELD

The embodiment discussed herein is related to an information processing program, an information processing method, and an information processing apparatus.

### BACKGROUND

In the related art, there is a technique of training a quantum circuit that outputs a classification result of input data. There is a method of utilizing a trained model to train a quantum circuit that outputs a classification result of input data in accordance with a feature amount extracted from the data by the trained model.

As the related art, for example, there is a technique of formulating an objective function including a loss term that minimizes a difference between a first representation and a second representation of a dataset and a regularization term that minimizes complexity. For example, there is a technique of temporarily stopping or temporarily interrupting a job in execution in consideration of a degree of dissatisfaction of a user. For example, there is a technique of replacing one or more components of a neural network with quantum components. For example, there is a technique of executing unsupervised learning on an input space via a discrete variational auto-encoder.

Japanese Laid-open Patent Publication Nos. 2019-096334 and 2001-022601, and U.S. Patent Application Publication Nos. 2020/0285947 and 2021/0365826 are disclosed as related art.

### SUMMARY

### TECHNICAL PROBLEM

With the related art, however, it may be difficult to improve classification accuracy by the quantum circuit. For example, as a relevance between a dataset for training to obtain a trained model and a dataset for training a quantum circuit by utilizing the trained model decreases, it tends to be difficult to improve classification accuracy by the quantum circuit.

In one aspect, an object of the present disclosure is to improve classification accuracy by a quantum circuit.

### SOLUTION TO PROBLEM

According to an aspect of the embodiments, there is provided an information processing program causing a computer to execute processing including: acquiring a trained model that has a function of outputting a classification result of input data in accordance with a feature amount extracted from the data; updating the acquired trained model based on a dataset that includes specific type of data such that classification accuracy of the specific type of data is improved; and controlling an arithmetic unit to train, based on the dataset, a quantum circuit that has a function of outputting a classification result of the specific type of data in accordance with a feature amount extracted from the specific type of data by the updated trained model.

### ADVANTAGEOUS EFFECTS OF INVENTION

According to one aspect, it is possible to improve classification accuracy by a quantum circuit.

### BRIEF DESCRIPTION OF DRAWINGS

FIG. 1 is an explanatory diagram illustrating an example of an information processing method according to an embodiment;
FIG. 2 is an explanatory diagram illustrating an example of an information processing system;
FIG. 3 is a block diagram illustrating a hardware configuration example of an information processing apparatus;
FIG. 4 is a block diagram illustrating a hardware configuration example of a calculation apparatus;
FIG. 5 is a block diagram illustrating an example of a functional configuration of the information processing apparatus;
FIG. 6 is a block diagram (part 1) illustrating a specific example of a functional configuration of the information processing system;
FIG. 7 is a block diagram (part 2) illustrating a specific example of the functional configuration of the information processing system;
FIG. 8 is an explanatory diagram (part 1) illustrating an example of an operation of the information processing system;
FIG. 9 is an explanatory diagram (part 2) illustrating an example of an operation of the information processing system;
FIG. 10 is an explanatory diagram (part 3) illustrating an example of an operation of the information processing system;
FIG. 11 is a flowchart illustrating an example of an overall processing procedure; and
FIG. 12 is a flowchart illustrating an example of an update processing procedure.

### DESCRIPTION OF EMBODIMENTS

Hereinafter, an embodiment of an information processing program, an information processing method, and an information processing apparatus according to the present disclosure is described in detail with reference to the drawings.

### (Example of Information Processing Method According to Embodiment)

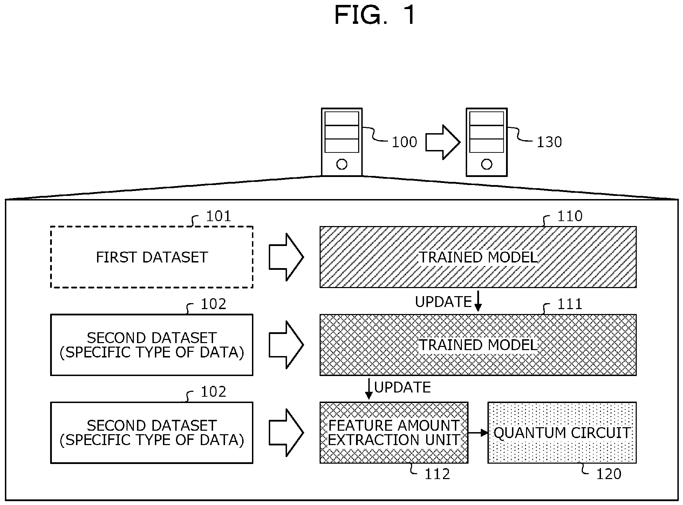

FIG. 1 is an explanatory diagram illustrating an example of an information processing method according to an embodiment. An information processing apparatus 100 is a computer for training a quantum circuit 120 that implements a function of outputting a classification result of data. The information processing apparatus 100 is, for example, a server, a personal computer (PC), or the like.

In the related art, there is quantum circuit learning (QCL) as a technique of training a quantum circuit having a function of outputting a classification result of input data. For example, it is considered that a quantum circuit having a function of outputting a classification result of input data is trained based on a dataset representing sample data and a correct answer to the output for the sample data in association with each other. For example, it is considered that a second quantum circuit is trained by updating a parameter of the second quantum circuit such that the output of the second quantum circuit corresponding to a quantum state obtained by converting the sample data by a first quantum circuit approaches the correct answer to the output for the sample data. With the QCL, it is considered that overlearning may be easily inhibited due to a unitary property of the quantum circuit. With the QCL, it is considered that expressiveness of describing the dataset is improved with an exponential number of basis functions.

With the QCL, on the other hand, there is a problem that it is difficult to improve classification accuracy, a problem that a time taken to train the quantum circuit increases, or the like. For example, since a number of qubits that may be used is relatively small and it is difficult to increase a scale of the quantum circuit over an actual machine of a current quantum computer, it may be difficult to improve classification accuracy. Since an error frequency of the qubit is relatively high and it is difficult to increase a depth of the quantum circuit over the actual machine of the current quantum computer, it may be difficult to improve classification accuracy. With a tendency that the actual machine of the current quantum computer is shared by a plurality of users, waiting for use of the actual machine of the current quantum computer occurs when the QCL is implemented, and the time taken to train the quantum circuit is likely to increase.

There is classical to quantum (C2Q) transfer learning as a technique of applying a method of transfer learning to the QCL for the purpose of improving classification accuracy or reducing the time taken to train. For example, it is considered that a trained model is utilized to train a quantum circuit that outputs a classification result of input data in accordance with a feature amount extracted from the data by the trained model.

However, in some cases, it is still difficult to improve classification accuracy by the quantum circuit. For example, as a relevance between a dataset for training to obtain a trained model and a dataset for training a quantum circuit by utilizing the trained model decreases, it tends to be difficult to improve classification accuracy by the quantum circuit. For example, in a case where the dataset for training to obtain the trained model relates to an English document and the dataset for training the quantum circuit relates to a Japanese document, it tends to be difficult to improve classification accuracy by the quantum circuit even when the trained model is utilized. When the C2Q transfer learning is executed, the problem that the time taken to train the quantum circuit is likely to increase is not solved because the waiting for use of the actual machine of the current quantum computer occurs.

In the present embodiment, an information processing method capable of improving classification accuracy by a quantum circuit will be described.

In FIG. 1, there is an arithmetic unit 130 capable of executing quantum calculation. The arithmetic unit 130 is, for example, an actual machine of a quantum computer. The information processing apparatus 100 may communicate with the arithmetic unit 130. For example, the arithmetic unit 130 may be included in the information processing apparatus 100. For example, the arithmetic unit 130 may be a quantum simulator.

(1-1) The information processing apparatus 100 acquires a trained model 110. The trained model 110 has a function of outputting a classification result of input data in accordance with a feature amount extracted from the data. For example, it is assumed that the trained model 110 is trained based on a first dataset 101. The trained model 110 is, for example, a neural network or the like. The trained model 110 includes, for example, parameters. The parameters are each, for example, a weight associated with an edge of the neural network, or the like. The trained model 110 includes, for example, a plurality of layers. The information processing apparatus 100 acquires the trained model 110 by training of the trained model 110 based on, for example, the first dataset 101. The information processing apparatus 100 may acquire the trained model 110 by receiving the trained model 110 from another computer, for example.

(1-2) The information processing apparatus 100 stores a second dataset 102 including a specific type of data. The information processing apparatus 100 updates the acquired trained model 110 based on the second dataset 102 such that classification accuracy of the specific type of data is improved. For example, by fine-tuning, the information processing apparatus 100 updates a parameter for a first half layer of the acquired trained model 110, based on the second dataset 102 such that classification accuracy of the specific type of data is improved.

(1-3) The information processing apparatus 100 controls the arithmetic unit 130 to train the quantum circuit 120 based on the second dataset 102. The quantum circuit 120 is trained to implement a function of outputting a classification result of input data (e.g., the specific type of data) in accordance with a feature amount extracted from the input data by an updated trained model 111. For example, the information processing apparatus 100 sets a first half layer of the updated trained model 111 in a feature amount extraction unit 112 to be added to the quantum circuit 120. The information processing apparatus 100 updates a parameter of the quantum circuit 120 based on, for example, the second dataset 102 so as to implement the function of outputting a classification result of data in accordance with a feature amount extracted from the data by the set feature amount extraction unit 112.

With this, the information processing apparatus 100 is able to improve classification accuracy by the quantum circuit 120. Even when, for example, a relevance between the first dataset 101 and the second dataset 102 is relatively small, the information processing apparatus 100 may temporarily update the trained model 110 in accordance with the second dataset 102. By utilizing the updated trained model 111 in accordance with, for example, the second dataset 102, the information processing apparatus 100 may train the quantum circuit 120 having relatively high classification accuracy. The classification accuracy relates to a specific type of data.

With a unitary property of the quantum circuit 120, the information processing apparatus 100 may facilitate inhibition of overlearning and may improve generalization performance. With an exponential number of basis functions, the information processing apparatus 100 may improve expressiveness of describing a dataset. When waiting for use of the arithmetic unit 130 occurs, the information processing apparatus 100 may update the trained model 110 by utilizing the waiting time. In this case, the information processing apparatus 100 may suppress an increase in time taken to train the quantum circuit 120 even when the waiting for use of the arithmetic unit 130 occurs.

Although a case where the function as the information processing apparatus 100 is implemented by a single computer has been described, the embodiment is not limited thereto. For example, there may be a case where the function as the information processing apparatus 100 is implemented by cooperation of a plurality of computers. For example, there may be a case where the function as the information processing apparatus 100 is implemented over a cloud.

### (Example of Information Processing System 200)

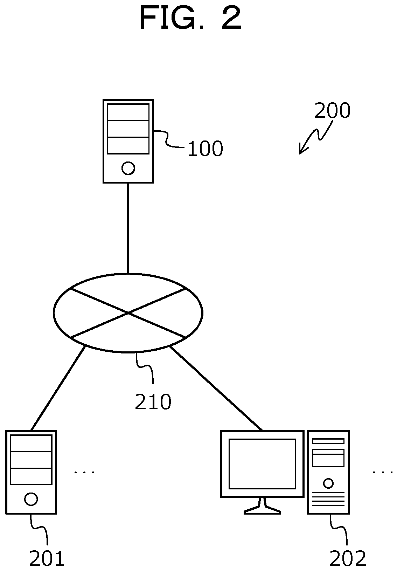

Next, an example of an information processing system 200 in which the information processing apparatus 100 illustrated in FIG. 1 is applied will be described with reference to FIG. 2.

FIG. 2 is an explanatory diagram illustrating an example of the information processing system 200. In FIG. 2, the information processing system 200 includes the information processing apparatus 100, a calculation apparatus 201, and a client apparatus 202.

In the information processing system 200, the information processing apparatus 100 and the calculation apparatus 201 are coupled to each other via a wired or wireless network 210. The network 210 is, for example, a local area network (LAN), a wide area network (WAN), the Internet, or the like. In the information processing system 200, the information processing apparatus 100 and the client apparatus 202 are coupled to each other via the wired or wireless network 210.

The information processing apparatus 100 is a computer for training a quantum circuit that implements a function of outputting a classification result of data. For example, the information processing apparatus 100 acquires a processing request for a quantum circuit training job. The processing request includes, for example, a dataset in which sample data and a correct answer to an output of the quantum circuit corresponding to the sample data are associated with each other. The processing request may include, for example, a trained model. The processing request may include a quantum circuit serving as a template for training. The template defines, for example, a qubit, defines a quantum gate forming the quantum circuit, and includes an initial value of a parameter related to the quantum gate.

For example, by receiving a processing request from another computer, the information processing apparatus 100 acquires the processing request. For example, the another computer is the client apparatus 202 or the like. For example, the information processing apparatus 100 may acquire the processing request by accepting an input of the processing request based on an operation input by a user.

In response to the processing request, the information processing apparatus 100 trains the quantum circuit based on the dataset. In response to the processing request, for example, the information processing apparatus 100 transmits an execution request for the quantum circuit training job to the calculation apparatus 201. For example, in response to transmitting the execution request for the quantum circuit training job to the calculation apparatus 201, the information processing apparatus 100 transitions to a state of waiting for execution of the quantum circuit training job. For example, while waiting for execution of the quantum circuit training job, the information processing apparatus 100 fine-tunes the trained model based on the dataset.

For example, the information processing apparatus 100 receives, from the calculation apparatus 201, a notification indicating that the quantum circuit training job is executable. For example, in response to receiving the notification, the information processing apparatus 100 controls the calculation apparatus 201 to train a quantum circuit that implements a function of outputting a classification result of data by utilizing the fine-tuned trained model. For example, the information processing apparatus 100 receives the trained quantum circuit from the calculation apparatus 201.

For example, the information processing apparatus 100 outputs the received quantum circuit. For example, the information processing apparatus 100 transmits the received quantum circuit to another computer. For example, the another computer is the client apparatus 202 or the like. For example, the information processing apparatus 100 may output the received quantum circuit such that the user may refer to the quantum circuit. The information processing apparatus 100 is, for example, a server, a PC, or the like.

The calculation apparatus 201 is a computer for executing quantum calculation. In accordance with the control of the information processing apparatus 100, the calculation apparatus 201 is responsible for all or a part of specific calculation processing. The calculation apparatus 201 is, for example, an actual machine of a quantum computer. The calculation apparatus 201 may be, for example, a computer shared by a plurality of users.

The client apparatus 202 is a computer for issuing a processing request for a quantum circuit training job. Based on an operation input by the user, the client apparatus 202 generates a processing request for a quantum circuit training job, and transmits the processing request to the information processing apparatus 100. The client apparatus 202 receives a quantum circuit from the information processing apparatus 100. The client apparatus 202 outputs the received quantum circuit such that the user may refer to the quantum circuit. The client apparatus 202 is, for example, a PC, a tablet terminal, a smartphone, or the like.

While a case where the information processing apparatus 100 and the calculation apparatus 201 are different apparatuses has been described, the embodiment is not limited to thereto. For example, there may be a case where the information processing apparatus 100 has a function as the calculation apparatus 201 and also operates as the calculation apparatus 201. While a case where the information processing apparatus 100 and the client apparatus 202 are different apparatuses has been described, the embodiment is not limited to thereto. For example, there may be a case where the information processing apparatus 100 has a function as the client apparatus 202 and also operates as the client apparatus 202.

### (Application Example of Information Processing System 200)

The information processing system 200 may be applied to, for example, an application of training a quantum circuit that implements a function of outputting a classification result of data representing an image. The classification result corresponds to, for example, a recognition result of an object captured in the image. The information processing system 200 may be applied to, for example, an application of training a quantum circuit that implements a function of outputting a classification result of data representing a document. The classification result is, for example, a type of the document.

(Hardware Configuration Example of Information Processing Apparatus 100)

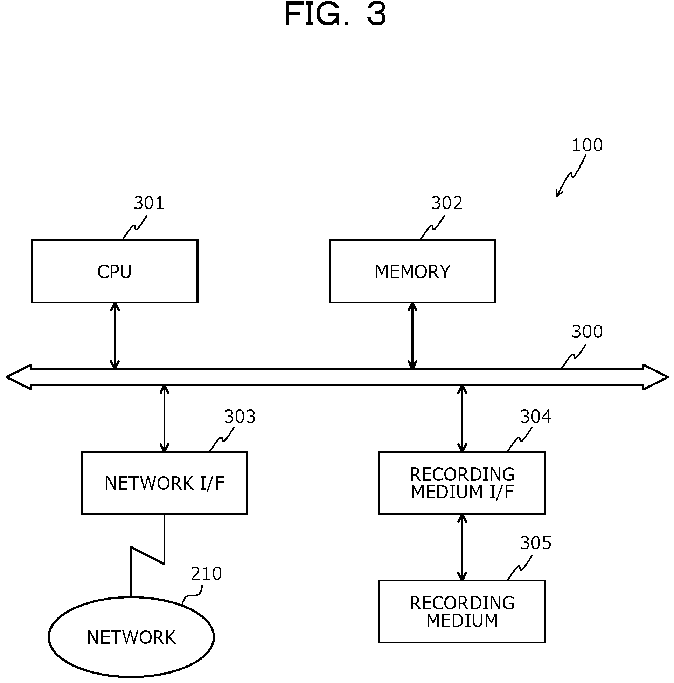

Next, a hardware configuration example of the information processing apparatus 100 will be described with reference to FIG. 3.

FIG. 3 is a block diagram illustrating a hardware configuration example of the information processing apparatus 100. In FIG. 3, the information processing apparatus 100 includes a central processing unit (CPU) 301, a memory 302, a network interface (I/F) 303, a recording medium I/F 304, and a recording medium 305. The individual components are coupled to one another by a bus 300.

The CPU 301 controls the entirety of the information processing apparatus 100. For example, the memory 302 includes a read-only memory (ROM), a random-access memory (RAM), a flash ROM, and the like. For example, the flash ROM and the ROM store various programs, and the RAM is used as a work area of the CPU 301. The programs stored in the memory 302 are loaded by the CPU 301, and cause the CPU 301 to execute coded processing.

The network I/F 303 is coupled to the network 210 through a communication line, and is coupled to another computer via the network 210. The network I/F 303 serves as an interface between the network 210 and the inside, and controls input and output of data from and to the another computer. For example, the network I/F 303 is a modem, a LAN adapter, or the like.

The recording medium I/F 304 controls reading and writing of data from and to the recording medium 305 in accordance with the control of the CPU 301. For example, the recording medium I/F 304 is a disk drive, a solid-state drive (SSD), a Universal Serial Bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be removably attached to the information processing apparatus 100.

In addition to the components described above, for example, the information processing apparatus 100 may include a keyboard, a mouse, a display, a printer, a scanner, a microphone, a speaker, or the like. The information processing apparatus 100 may include a plurality of recording medium I/Fs 304 and a plurality of recording media 305. The information processing apparatus 100 may not include the recording medium I/F 304 or the recording medium 305.

### (Hardware Configuration Example of Calculation Apparatus 201)

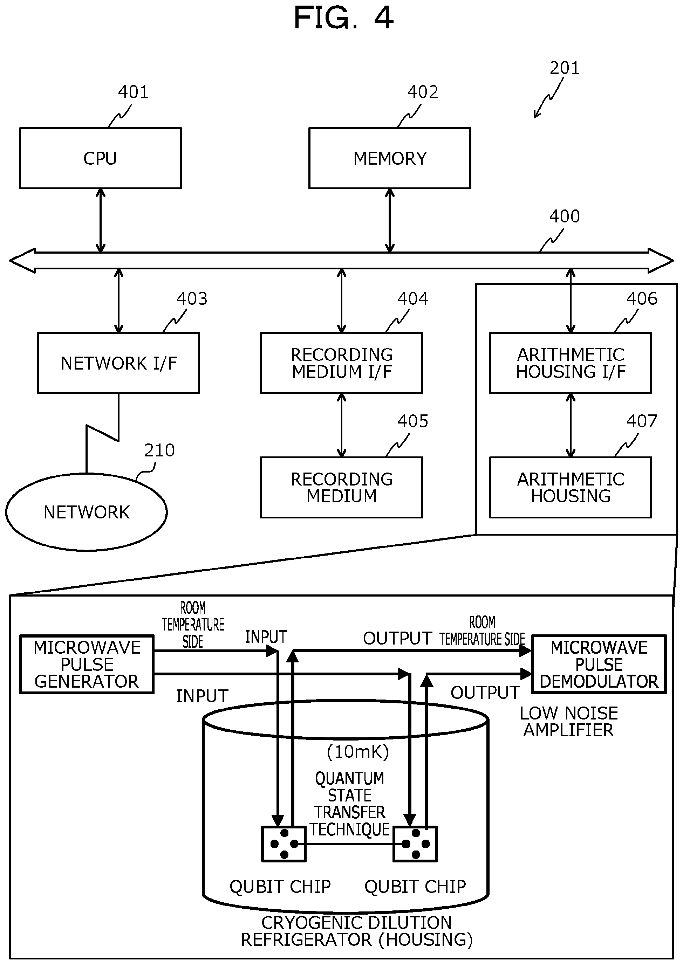

Next, with reference to FIG. 4, a hardware configuration example of the calculation apparatus 201 will be described.

FIG. 4 is a block diagram illustrating the hardware configuration example of the calculation apparatus 201. In FIG. 4, the calculation apparatus 201 includes a CPU 401, a memory 402, a network I/F 403, a recording medium I/F 404, and a recording medium 405. The calculation apparatus 201 further includes an arithmetic housing I/F 406 and an arithmetic housing 407. The individual components are coupled to one another by a bus 400.

The CPU 401 controls the entirety of the calculation apparatus 201. The memory 402 includes, for example, a ROM, a RAM, a flash ROM, or the like. For example, the flash ROM and the ROM store various programs, and the RAM is used as a work area of the CPU 401. The programs stored in the memory 402 are loaded by the CPU 401, and cause the CPU 401 to execute coded processing.

The network I/F 403 is coupled to the network 210 through a communication line, and is coupled to another computer via the network 210. The network I/F 403 serves as an interface between the network 210 and the inside, and controls input and output of data from and to the another computer. For example, the network I/F 403 is a modem, a LAN adapter, or the like.

The recording medium I/F 404 controls reading and writing of data from and to the recording medium 405 in accordance with the control of the CPU 401. For example, the recording medium I/F 404 is a disk drive, an SSD, a USB port, or the like. The recording medium 405 is a nonvolatile memory that stores data written under the control of the recording medium I/F 404. The recording medium 405 is, for example, a disk, a semiconductor memory, a USB memory, or the like. The recording medium 405 may be removably attached to the calculation apparatus 201.

The arithmetic housing I/F 406 controls access to the arithmetic housing 407 in accordance with the control of the CPU 401. By using a microwave pulse generator, the arithmetic housing I/F 406 converts a signal output from the CPU 401 into a signal to be input to the arithmetic housing 407, and transmits the signal to the arithmetic housing 407. By using a microwave pulse demodulator, the arithmetic housing I/F 406 converts a signal output from the arithmetic housing 407 into a signal to be input to the CPU 401, and transmits the signal to the CPU 401. The arithmetic housing 407 is an arithmetic device in which one or more qubit chips cooled to a very low temperature of 10 mK are mounted. The qubit chip represents, for example, a logical qubit. By using one or more qubit chips, the arithmetic housing 407 executes a predetermined arithmetic operation in accordance with the input signal and outputs an output signal corresponding to the result of the predetermined arithmetic operation.

In addition to the above-described components, the calculation apparatus 201 may include, for example, a keyboard, a mouse, a display, a printer, a scanner, a microphone, a speaker, or the like. The calculation apparatus 201 may include a plurality of recording medium I/Fs 404 and a plurality of recording media 405. The calculation apparatus 201 may not include the recording medium I/F 404 or the recording medium 405. The qubit chips in the arithmetic housing 407 may be controlled by a method other than the microwave. The qubit chips in the arithmetic housing 407 may implement, for example, optical qubits.

### (Example of Functional Configuration of Information Processing Apparatus 100)

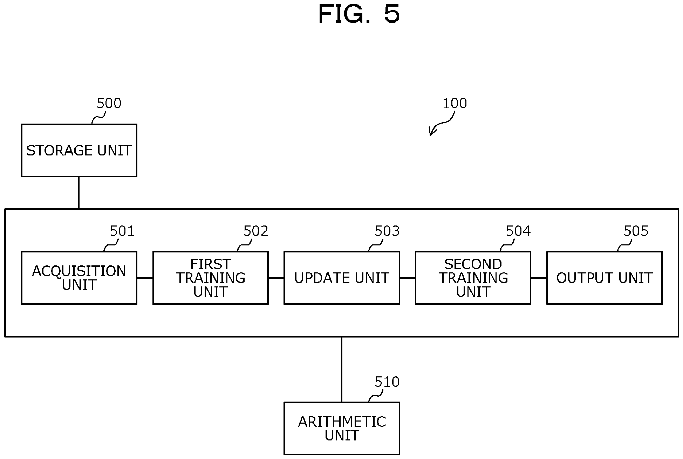

Next, an example of a functional configuration of the information processing apparatus 100 will be described with reference to FIG. 5.

FIG. 5 is a block diagram illustrating the example of the functional configuration of the information processing apparatus 100. The information processing apparatus 100 includes a storage unit 500, an acquisition unit 501, a first training unit 502, an update unit 503, a second training unit 504, and an output unit 505. There is an arithmetic unit 510 capable of executing quantum calculation. The arithmetic unit 510 may communicate with the information processing apparatus 100.

The storage unit 500 is implemented by using a storage area such as the memory 302 or the recording medium 305 illustrated in FIG. 3, for example. While a case where the storage unit 500 is included in the information processing apparatus 100 will be described below, the embodiment is not limited to thereto. For example, there may be a case where the storage unit 500 is included in an apparatus different from the information processing apparatus 100 and storage contents of the storage unit 500 may be referred to from the information processing apparatus 100.

The units from the acquisition unit 501 to the output unit 505 function as an example of the control unit. For example, functions of the units from the acquisition unit 501 to the output unit 505 are implemented by the CPU 301 executing a program stored in the storage area such as the memory 302 or the recording medium 305 illustrated in FIG. 3 or by using the network I/F 303. A processing result by each functional unit is stored in, for example, the storage area such as the memory 302 or the recording medium 305 illustrated in FIG. 3.

The storage unit 500 stores various kinds of information to be updated or referred to in the processing of each functional unit. The storage unit 500 stores, for example, a trained model. The trained model has a function of outputting a classification result of input data in accordance with a feature amount extracted from the data. The trained model is, for example, a neural network.

The trained model is trained by using, for example, a first dataset. The first dataset includes, for example, each type of data of a plurality of types. The first dataset represents, for example, each type of data and a correct answer of a classification result of the data in association with each other. The trained model is acquired by, for example, the acquisition unit 501. The trained model may be trained by the first training unit 502 by using, for example, the first dataset.

The storage unit 500 stores, for example, a dataset. For example, the storage unit 500 stores a first dataset. The first dataset is acquired by, for example, the acquisition unit 501. The first dataset may be set in advance by the user, for example.

The storage unit 500 stores, for example, a second dataset used when a quantum circuit is trained. The quantum circuit has a function of outputting a classification result of data. The second dataset includes, for example, specific type of data. The specific type may be, for example, any type of the plurality of types. The specific type may be, for example, a type different from the plurality of types. The second dataset represents, for example, the specific type of data and a correct answer of a classification result of the data in association with each other. The second dataset is acquired by, for example, the acquisition unit 501. The second dataset may be set in advance by the user, for example.

The storage unit 500 stores, for example, a quantum circuit serving as a template for training. The template for training defines, for example, a qubit, defines a quantum gate forming the quantum circuit, and includes an initial value of a parameter related to the quantum gate. The template for training is acquired by, for example, the acquisition unit 501. The template for training may be set in advance by the user, for example.

The acquisition unit 501 acquires various kinds of information to be used for the processing of each functional unit. The acquisition unit 501 stores the acquired various kinds of information in the storage unit 500 or outputs the information to the respective functional units. The acquisition unit 501 may output the various kinds of information stored in the storage unit 500 to the respective functional units. The acquisition unit 501 acquires the various kinds of information based on an operation input by the user, for example. For example, the acquisition unit 501 may receive the various kinds of information from an apparatus different from the information processing apparatus 100.

For example, the acquisition unit 501 acquires a processing request for requesting training of the quantum circuit. The processing request may include, for example, a first dataset. The processing request may include, for example, a trained model. The processing request may include, for example, a second dataset. The processing request may include, for example, a quantum circuit serving as a template for training. For example, the acquisition unit 501 acquires the processing request by receiving the processing request from another computer. For example, the another computer is the client apparatus 202 or the like. For example, the acquisition unit 501 may acquire the processing request by accepting an input of the processing request based on an operation input by the user through an input device (not illustrated).

When, for example, the first training unit 502 generates a trained model, the acquisition unit 501 acquires a first dataset. For example, the acquisition unit 501 acquires the first dataset by extracting the first dataset from the processing request. For example, the acquisition unit 501 may acquire the first dataset by receiving the first dataset from another computer. For example, the another computer is the client apparatus 202 or the like. For example, the acquisition unit 501 may acquire the first dataset by accepting an input of the first dataset based on an operation input by the user through an input device (not illustrated).

When, for example, the first training unit 502 does not generate a trained model, the acquisition unit 501 acquires the trained model. For example, the acquisition unit 501 acquires the trained model by extracting the trained model from the processing request. For example, the acquisition unit 501 may acquire the trained model by receiving the trained model from another computer. For example, the another computer is the client apparatus 202 or the like. For example, the acquisition unit 501 may acquire the trained model by accepting an input of the trained model based on an operation input by the user through an input device (not illustrated).

For example, the acquisition unit 501 acquires a second dataset. For example, the acquisition unit 501 acquires the second dataset by extracting the second dataset from the processing request. For example, the acquisition unit 501 may acquire the second dataset by receiving the second dataset from another computer. For example, the another computer is the client apparatus 202 or the like. For example, the acquisition unit 501 may acquire the second dataset by accepting an input of the second dataset based on an operation input by the user through an input device (not illustrated).

For example, the acquisition unit 501 acquires a quantum circuit serving as a template for training. For example, the acquisition unit 501 acquires the quantum circuit by extracting the quantum circuit from the processing request. For example, the acquisition unit 501 may acquire the quantum circuit by receiving the quantum circuit from another computer. For example, the another computer is the client apparatus 202 or the like. For example, the acquisition unit 501 may acquire the quantum circuit by accepting an input of the quantum circuit based on an operation input by the user through an input device (not illustrated).

The acquisition unit 501 may accept a start trigger for starting the processing of any of the functional units. For example, the start trigger is a predetermined operation input by the user. For example, the start trigger may be reception of predetermined information from another computer. For example, the start trigger may also be output of predetermined information by any of the functional units. For example, the acquisition unit 501 may accept acquisition of the processing request as the start trigger for starting the processing of the first training unit 502, the update unit 503, and the second training unit 504.

The first training unit 502 generates a trained model. The first training unit 502 generates a trained model by updating a parameter of a model serving as a template based on, for example, the first dataset such that a classification result of each type of data of a plurality of types output by the model serving as the template in accordance with the data approaches a correct answer. With this, the first training unit 502 may prepare the trained model serving as a source of the feature amount extraction unit to be added to the quantum circuit.

The update unit 503 updates the trained model acquired by the acquisition unit 501 based on the second dataset such that classification accuracy of specific type of data is improved. The update is, for example, fine-tuning. The update unit 503 fine-tunes the trained model by updating the parameter of the trained model based on, for example, the second dataset such that the classification result of the specific type of data output by the trained model in accordance with the data approaches the correct answer. With this, before the quantum circuit is trained, the update unit 503 may temporarily update the trained model serving as the source of the feature amount extraction unit to be added to the quantum circuit in accordance with the second dataset, and may make it easy to train the quantum circuit having relatively high classification accuracy.

In response to the processing request, for example, the update unit 503 may transmit a request for using the arithmetic unit 510 for training to the arithmetic unit 510. For example, before the arithmetic unit 510 becomes available for training in response to the request, the update unit 503 starts processing of updating the trained model acquired by the acquisition unit 501 based on the second dataset such that classification accuracy of the specific type of data is improved. For example, until the arithmetic unit 510 becomes available for training in response to the request, the update unit 503 may repeatedly execute processing of updating the trained model acquired by the acquisition unit 501 based on the second dataset such that classification accuracy of the specific type of data is improved. With this, the update unit 503 may update the trained model by utilizing the waiting time until the arithmetic unit 510 becomes available for training in response to the request. Consequently, the update unit 503 may suppress an increase in time taken to train the quantum circuit.

The second training unit 504 controls the arithmetic unit 510 to train the quantum circuit based on the second dataset. The quantum circuit has a function of outputting a classification result of input data (e.g., the specific type of data) in accordance with a feature amount extracted from the input data by the trained model updated by the update unit 503. After the arithmetic unit 510 becomes available for training, for example, the second training unit 504 sets a first half layer of the trained model updated by the update unit 503 in the feature amount extraction unit to be added to the quantum circuit. The feature amount extraction unit is preferably, for example, the first half layer of the trained model last updated by the update unit 503 after the arithmetic unit 510 becomes available for training.

The second training unit 504 controls the arithmetic unit 510 so as to train, based on the second dataset, the quantum circuit having a function of outputting a classification result of input data (e.g., the specific type of data) in accordance with a feature amount extracted from the input data by the set feature amount extraction unit. With this, the second training unit 504 may train the quantum circuit with relatively high classification accuracy. Even when a relevance between the first dataset and the second dataset is relatively small, the second training unit 504 may train the quantum circuit having relatively high classification accuracy.

When, for example, the update by the update unit 503 is not completed after the arithmetic unit 510 becomes available for training, the second training unit 504 may set the first half layer of the trained model as the source as the feature amount extraction unit to be added to the quantum circuit. The second training unit 504 controls the arithmetic unit 510 so as to train, based on the second dataset, the quantum circuit having a function of outputting a classification result of input data (e.g., the specific type of data) in accordance with a feature amount extracted from the input data by the set feature amount extraction unit. With this, the second training unit 504 may train the quantum circuit without waiting for the completion of the update, and may suppress an increase in time taken to train the quantum circuit.

The output unit 505 outputs a processing result of at least any of the functional units. For example, an output form is display on a display, print output to a printer, transmission to an external device through the network I/F 303, or storage in a storage area such as the memory 302 or the recording medium 305. With this, the output unit 505 is capable of notifying the user of the processing result of at least any of the functional units, and thus improving convenience of the information processing apparatus 100.

For example, the output unit 505 outputs the quantum circuit trained by the second training unit 504. For example, the output unit 505 transmits the quantum circuit to another computer. For example, the another computer is the client apparatus 202 or the like. For example, the output unit 505 may output the quantum circuit such that the user may refer to the quantum circuit. With this, the output unit 505 may make the quantum circuit available to the outside.

While the case where the information processing apparatus 100 includes the first training unit 502, the update unit 503, and the second training unit 504 has been described, the embodiment is not limited to thereto. For example, the information processing apparatus 100 may not include any of the functional units. For example, the information processing apparatus 100 may not include the first training unit 502. While the case where the information processing apparatus 100 does not include the arithmetic unit 510 has been described, the embodiment is not limited to thereto. For example, the information processing apparatus 100 may include the arithmetic unit 510. The arithmetic unit 510 may be a quantum simulator.

### (Specific Examples of Functional Configuration of Information Processing System 200)

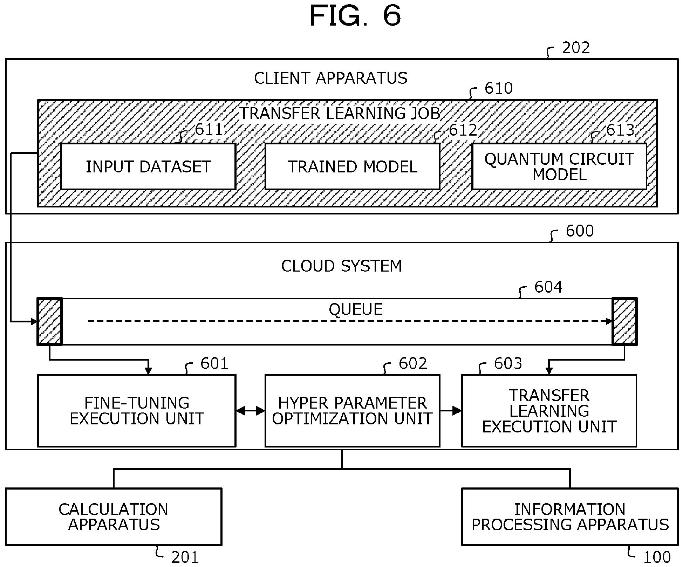

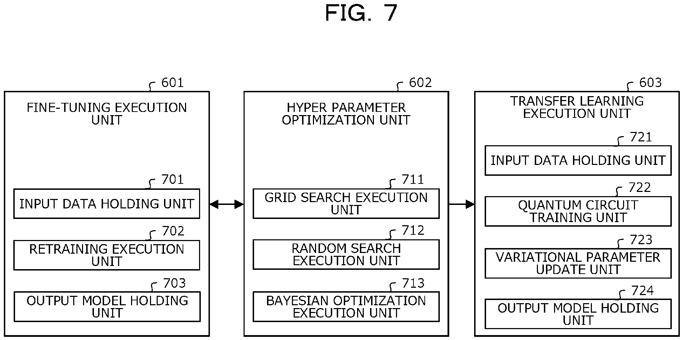

Next, with reference to FIGs. 6 and 7, specific examples of the functional configuration of the information processing system 200 will be described.

FIG. 6 and FIG. 7 are block diagrams illustrating the specific examples of the functional configuration of the information processing system 200. The information processing system 200 includes a cloud system 600. The cloud system 600 includes, for example, a fine-tuning execution unit 601, a hyper parameter optimization unit 602, and a transfer learning execution unit 603. The fine-tuning execution unit 601 and the hyper parameter optimization unit 602 are implemented by, for example, the information processing apparatus 100. The transfer learning execution unit 603 is implemented by, for example, the calculation apparatus 201.

Based on an operation input by the user through an input device (not illustrated), the client apparatus 202 generates a transfer learning job 610 and transmits the transfer learning job 610 to the cloud system 600. The transfer learning job 610 includes an input dataset 611, a trained model 612, and a quantum circuit model 613. With the cloud system 600, the information processing apparatus 100 receives the transfer learning job 610 and submits the transfer learning job 610 to a queue 604. The queue 604 is a first in first out (FIFO) queue. The queue 604 may be included in the calculation apparatus 201. The queue 604 may be included in a management apparatus (not illustrated) that manages the calculation apparatus 201. By sequentially taking out the jobs from the queue 604, the calculation apparatus 201 executes quantum calculation corresponding to the jobs.

In response to the transfer learning job 610 being submitted to the queue 604, the fine-tuning execution unit 601 fine-tunes the trained model 612. For example, until the transfer learning job 610 becomes executable, the fine-tuning execution unit 601 repeatedly fine-tunes the trained model 612 based on the input dataset 611 by referring to a hyper parameter. The hyper parameter is, for example, a value designating a layer to be fixed and a layer to be updated. The hyper parameter is, for example, a learning rate. The hyper parameter is, for example, a number of epochs. Each time the fine-tuning execution unit 601 performs fine-tuning on the trained model 612, the hyper parameter optimization unit 602 updates the hyper parameter.

The calculation apparatus 201 takes out the transfer learning job 610 from the queue 604. In response to the calculation apparatus 201 taking out the transfer learning job 610 from the queue 604, the transfer learning execution unit 603 sets the first half layer of the fine-tuned trained model 612 in the feature amount extraction unit to be added to the quantum circuit model 613. The transfer learning execution unit 603 updates a variational parameter of the quantum circuit model 613 based on the input dataset 611 so as to implement a function of outputting a classification result of data in accordance with a feature amount extracted from the data by the feature amount extraction unit. With this, the transfer learning execution unit 603 may train the quantum circuit model 613 having relatively high classification accuracy. Next, the description proceeds to a description of FIG. 7.

As illustrated in FIG. 7, the fine-tuning execution unit 601 includes an input data holding unit 701, a retraining execution unit 702, and an output model holding unit 703, for example. The input data holding unit 701 holds the input dataset 611 and the trained model 612 in an initial state. The retraining execution unit 702 fine-tunes the trained model 612. The output model holding unit 703 holds the fine-tuned trained model 612.

For example, the hyper parameter optimization unit 602 includes a grid search execution unit 711, a random search execution unit 712, and a Bayesian optimization execution unit 713. The grid search execution unit 711 updates the hyper parameter by the grid search. The random search execution unit 712 updates the hyper parameter by the random search. The Bayesian optimization execution unit 713 updates the hyper parameter by the Bayesian optimization.

For example, the hyper parameter optimization unit 602 updates the hyper parameter by at least any of the grid search execution unit 711, the random search execution unit 712, and the Bayesian optimization execution unit 713. For example, the hyper parameter optimization unit 602 may sequentially select the grid search execution unit 711, the random search execution unit 712, and the Bayesian optimization execution unit 713, and may update the hyper parameter by the selected functional unit. For example, the hyper parameter optimization unit 602 may update the hyper parameter by a designated functional unit among the grid search execution unit 711, the random search execution unit 712, and the Bayesian optimization execution unit 713.

For example, the transfer learning execution unit 603 includes an input data holding unit 721, a quantum circuit training unit 722, a variational parameter update unit 723, and an output model holding unit 724. The input data holding unit 721 holds the input dataset 611, the fine-tuned trained model 612, and the quantum circuit model 613.

The quantum circuit training unit 722 sets the first half layer of the fine-tuned trained model 612 in the feature amount extraction unit to be added to the quantum circuit model 613. The quantum circuit training unit 722 executes the quantum circuit model 613 on the feature amount extracted from the data by the feature amount extraction unit based on the input dataset 611 to obtain a quantum state. The variational parameter update unit 723 updates the quantum circuit model 613 by updating the variational parameter of the quantum circuit model 613 based on the quantum state obtained by the quantum circuit training unit 722 such that the classification result of the data approaches the correct answer. The output model holding unit 724 holds the updated quantum circuit model 613. With this, the transfer learning execution unit 603 may train the quantum circuit model 613 having relatively high classification accuracy.

### (Example of Operation of Information Processing System 200)

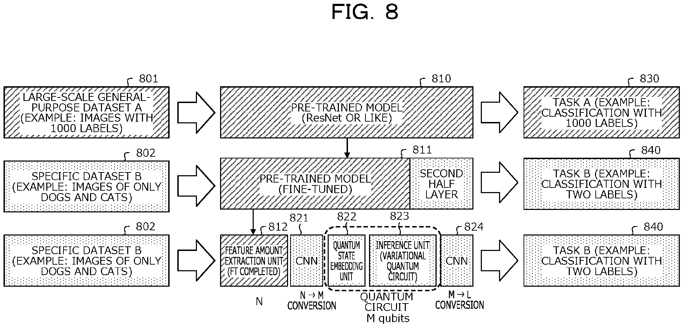

Next, with reference to FIGs. 8 to 10, an example of an operation of the information processing system 200 will be described.

FIGs. 8 to 10 are explanatory diagrams illustrating the example of the operation of the information processing system 200. In FIG. 8, there is a pre-trained model 810 that has been trained based on a large-scale general-purpose dataset A 801. The pre-trained model 810 has a function of outputting any label serving as a classification result of input data among 1000 labels. With the pre-trained model 810, for example, a task A 830 of classifying data with 1000 labels is solved. The pre-trained model 810 is, for example, ResNet or the like. The large-scale general-purpose dataset A 801 represents data representing an image and any label of 1000 labels as a correct answer of the classification result of the data in association with each other.

It may be desirable to train a quantum circuit model with relatively high classification accuracy of specific data based on a specific dataset B 802 by utilizing the pre-trained model 810. For example, a case is considered where the information processing apparatus 100 receives and accepts a transfer learning job for training a quantum circuit model from the client apparatus 202. It is desirable that the quantum circuit model implement a function of outputting any label, of two labels, serving as a classification result of input data. With the quantum circuit model, for example, a task B 840 of classifying data with two labels is solved.

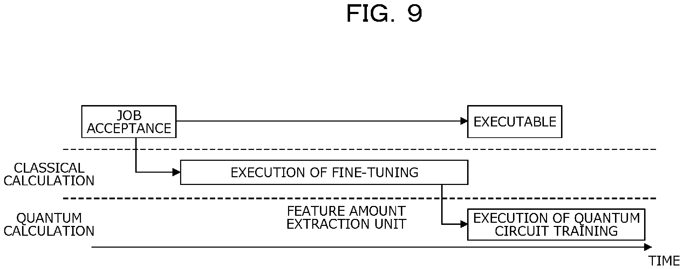

The quantum circuit model includes, for example, a convolutional neural network (CNN) 821, a quantum state embedding unit 822, an inference unit 823, and a CNN 824. The CNN 821 converts an N-dimensional feature amount into an M-dimensional quantum state. The quantum state embedding unit 822 and the inference unit 823 handle the M-dimensional quantum state. The CNN 824 converts the M-dimensional quantum state into an L-dimensional feature amount. The specific dataset B 802 represents data representing a specific image and any label of the two labels as a correct answer of the classification result of the data in association with each other. The description proceeds to a description of FIG. 9.

As illustrated in FIG. 9, the information processing apparatus 100 submits the received transfer learning job to a queue. In response to the transfer learning job being submitted to the queue, the fine-tuning execution unit 601 fine-tunes the pre-trained model 810 until the transfer learning job becomes executable. The description returns to the description of FIG. 8. The fine-tuning execution unit 601 repeatedly fine-tunes the pre-trained model 810 based on the specific dataset B 802 by referring to the hyper parameter, for example. Each time the fine-tuning execution unit 601 fine-tunes the pre-trained model 810, the hyper parameter optimization unit 602 updates the hyper parameter. With this, the fine-tuning execution unit 601 may update the pre-trained model 810 serving as a source of a feature amount extraction unit 812 to be added to the quantum circuit model in accordance with the specific dataset B 802. The description proceeds to the description of FIG. 9 again.

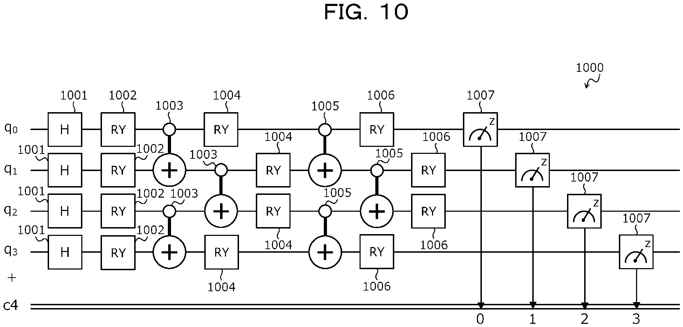

As illustrated in FIG. 9, when the transfer learning job becomes executable, the transfer learning execution unit 603 trains the quantum circuit model by utilizing a fine-tuned pre-trained model 811. The training corresponds to, for example, updating of the variational parameter of the inference unit 823 of the quantum circuit model. By using FIG. 10, an example of the inference unit 823 of the quantum circuit model will be described.

As illustrated in FIG. 10, the inference unit 823 is, for example, a quantum circuit related to qubits q₀, q₁, q₂, and q₃. The inference unit 823 includes, for example, Hadamard gates 1001. The inference unit 823 includes, for example, rotation gates 1002. The inference unit 823 includes, for example, controlled NOT (CNOT) gates 1003. The inference unit 823 includes, for example, rotation gates 1004. The inference unit 823 includes, for example, CNOT gates 1005. The inference unit 823 includes, for example, rotation gates 1006. The inference unit 823 includes, for example, measurement units 1007 that measure a quantum state and copy the quantum state to a classical bit c₄. The variational parameter is, for example, a rotation angle of the rotation gates 1002, 1004, and 1006, and the like.

The description returns to the description of FIG. 8. The transfer learning execution unit 603 sets a first half layer of the fine-tuned pre-trained model 811 in the feature amount extraction unit 812 to be added to the quantum circuit model. The transfer learning execution unit 603 updates the variational parameter of the inference unit 823 based on the specific dataset B 802 so as to implement a function of outputting a classification result of data in accordance with the feature amount extracted from the data by the feature amount extraction unit 812.

With this, even when a relevance between the large-scale general-purpose dataset A 801 and the specific dataset B 802 is relatively low, the transfer learning execution unit 603 may train the quantum circuit model with relatively high classification accuracy. By utilizing the pre-trained model 811, the transfer learning execution unit 603 may train the inference unit 823 of the quantum circuit model after temporarily updating the pre-trained model 811 in accordance with the specific dataset B 802, for example.

With a unitary property of the quantum circuit model, the information processing apparatus 100 may facilitate inhibition of overlearning and may improve generalization performance. With an exponential number of basis functions, the information processing apparatus 100 may improve expressiveness of describing a dataset. By utilizing the waiting time until the transfer learning job becomes executable, the information processing apparatus 100 may fine-tune the pre-trained model 811 and suppress an increase in time taken to train the quantum circuit model.

When the fine-tuning of the pre-trained model 811 is not completed until the transfer learning job becomes executable, the transfer learning execution unit 603 may set the first half layer of the pre-trained model 811 as a source in the feature amount extraction unit 812 to be added to the quantum circuit model. With this, the transfer learning execution unit 603 may suppress an increase in time taken to train the quantum circuit model.

### (Overall Processing Procedure)

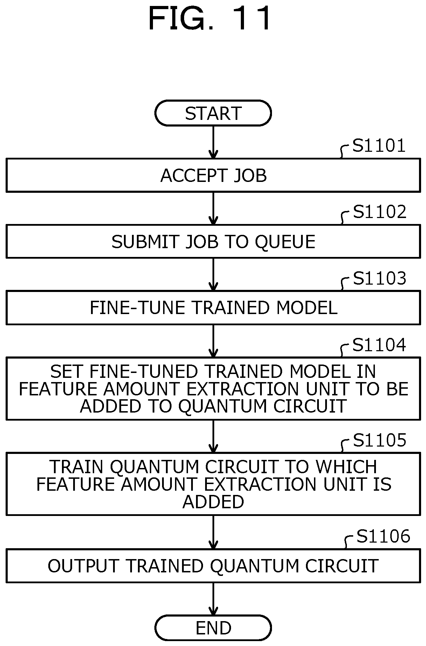

Next, an example of an overall processing procedure executed by the information processing apparatus 100 will be described with reference to FIG. 11. The overall processing is implemented by, for example, the CPU 301, the storage area such as the memory 302 or the recording medium 305, and the network I/F 303 illustrated in FIG. 3.

FIG. 11 is a flowchart illustrating the example of the overall processing procedure. In FIG. 11, the information processing apparatus 100 accepts a quantum circuit training job (step S1101). The information processing apparatus 100 submits the quantum circuit training job to a queue (step S1102).

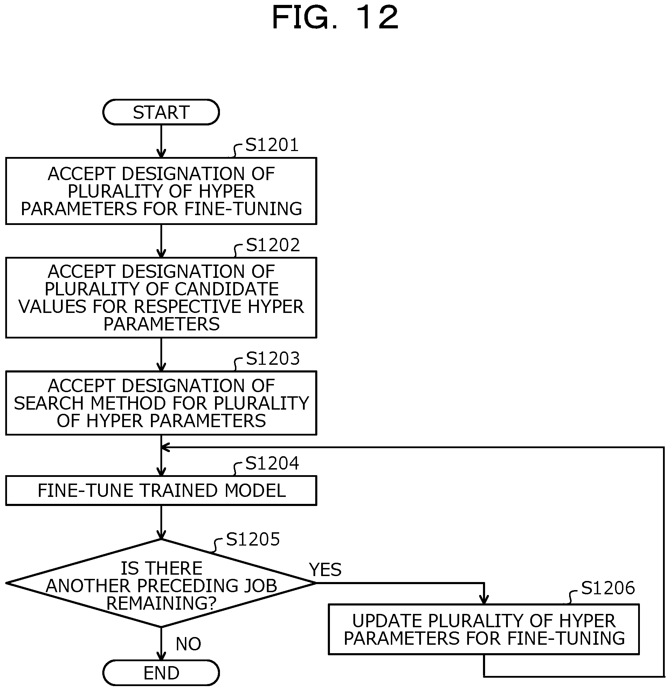

By executing update processing to be described later in FIG. 12, the information processing apparatus 100 fine-tunes a trained model (step S1103). The information processing apparatus 100 sets the fine-tuned trained model in a feature amount extraction unit to be added to the quantum circuit (step S1104).

The information processing apparatus 100 controls the calculation apparatus 201 so as to train the quantum circuit to which the feature amount extraction unit is added based on a specific dataset (step S1105). The information processing apparatus 100 outputs the trained quantum circuit (step S1106). The information processing apparatus 100 ends the overall processing.

### (Update Processing Procedure)

Next, an example of an update processing procedure executed by the information processing apparatus 100 will be described with reference to FIG. 12. The update processing is implemented by, for example, the CPU 301, the storage area such as the memory 302 or the recording medium 305, and the network I/F 303 illustrated in FIG. 3.

FIG. 12 is a flowchart illustrating the example of the update processing procedure. In FIG. 12, the information processing apparatus 100 accepts designation of a plurality of hyper parameters for fine-tuning (step S1201). The information processing apparatus 100 accepts designation of a plurality of candidate values each for a corresponding hyper parameter of the plurality of hyper parameters (step S1202).

The information processing apparatus 100 accepts designation of a search method for the plurality of hyper parameters (step S1203). The information processing apparatus 100 fine-tunes the trained model based on a specific dataset by referring to the candidate value for each hyper parameter (step S1204).

The information processing apparatus 100 determines whether or not there is another preceding job remaining in the queue (step S1205). When there is another job remaining (step S1205: Yes), the information processing apparatus 100 updates the plurality of hyper parameters for fine-tuning by the designated search method (step S1206), and returns to the processing in step S1204. When there is no another job remaining (step S1205: No), the information processing apparatus 100 ends the update processing.

As described above, with the information processing apparatus 100, it is possible to acquire a trained model having a function of outputting a classification result of input data in accordance with a feature amount extracted from the data. With the information processing apparatus 100, it is possible to update the acquired trained model based on a dataset including specific type of data such that classification accuracy of the specific type of data is improved. With the information processing apparatus 100, it is possible to control the arithmetic unit so as to train, based on the dataset, a quantum circuit having a function of outputting a classification result of input data (e.g., the specific type of data) in accordance with a feature amount extracted from the input data by the updated trained model. With this, the information processing apparatus 100 may train the quantum circuit with relatively high classification accuracy.

With the information processing apparatus 100, it is possible to transmit a request for using the arithmetic unit for training to the arithmetic unit. With the information processing apparatus 100, the update processing may be started before the arithmetic unit becomes available for training in response to the request. With this, the information processing apparatus 100 may suppress an increase in time taken to train the quantum circuit by utilizing the waiting time until the arithmetic unit becomes available for training in response to the request.

With the information processing apparatus 100, the update processing may be repeatedly executed in response to the request until the arithmetic unit becomes available for training. With the information processing apparatus 100, after the arithmetic unit becomes available for training, it is possible to control the arithmetic unit so as to train the quantum circuit having a function of outputting a classification result of input data (e.g., the specific type of data) in accordance with a feature amount extracted from the input data by the last updated trained model. With this, the information processing apparatus 100 may suppress an increase in time taken to train the quantum circuit by utilizing the waiting time until the arithmetic unit becomes available for training in response to the request. Until the arithmetic unit becomes available for training in response to the request, the information processing apparatus 100 may update the trained model to a more appropriate state.

With the information processing apparatus 100, the trained quantum circuit may be output. With this, the information processing apparatus 100 may enable the quantum circuit having relatively high classification accuracy to be used externally.

The information processing method described in the present embodiment may be implemented by causing a computer, such as a personal computer (PC) or a workstation, to execute a program prepared in advance. The information processing program described in the present embodiment is recorded in a computer-readable recording medium, and is executed by being read from the recording medium by the computer. The recording medium is a hard disk, a flexible disk, a compact disc (CD)-ROM, a magneto-optical (MO) disk, a Digital Versatile Disc (DVD), or the like. The information processing program described in the present embodiment may be distributed via a network such as the Internet.

Regarding the embodiment described above, appendices below are further disclosed.

## Claims

1. An information processing program causing a computer to execute processing comprising:
acquiring a trained model that has a function of outputting a classification result of input data in accordance with a feature amount extracted from the data;
updating the acquired trained model based on a dataset that includes specific type of data such that classification accuracy of the specific type of data is improved; and
controlling an arithmetic unit to train, based on the dataset, a quantum circuit that has a function of outputting a classification result of the specific type of data in accordance with a feature amount extracted from the specific type of data by the updated trained model.

2. The information processing program according to claim 1, the processing further comprising:
transmitting, to the arithmetic unit, a request for using the arithmetic unit for the training, wherein
the updating is started before the arithmetic unit becomes available for the training in response to the request.

3. The information processing program according to claim 2, wherein
the updating is repeatedly executed until the arithmetic unit becomes available for the training in response to the request, and
in the controlling,
after the arithmetic unit becomes available for the training, the arithmetic unit is controlled to train, based on the dataset, a quantum circuit that has a function of outputting a classification result of the specific type of data in accordance with a feature amount extracted from the specific type of data by the last updated trained model.

4. An information processing method implemented by a computer, comprising:
the computer acquiring a trained model that has a function of outputting a classification result of input data in accordance with a feature amount extracted from the data;
the computer updating the acquired trained model based on a dataset that includes specific type of data such that classification accuracy of the specific type of data is improved; and
the computer controlling an arithmetic unit to train, based on the dataset, a quantum circuit that has a function of outputting a classification result of the specific type of data in accordance with a feature amount extracted from the specific type of data by the updated trained model.

5. An information processing apparatus comprising a control unit configured to perform processing including:
acquiring a trained model that has a function of outputting a classification result of input data in accordance with a feature amount extracted from the data;
updating the acquired trained model based on a dataset that includes specific type of data such that classification accuracy of the specific type of data is improved; and
controlling an arithmetic unit to train, based on the dataset, a quantum circuit that has a function of outputting a classification result of the specific type of data in accordance with a feature amount extracted from the specific type of data by the updated trained model.
